# EUROPEAN PATENT SPECIFICATION

(11) **EP 0 594 460 B1**
(45) Date of publication and mention of the grant of the patent: **12.01.2000**
(21) Application number: 93308445.1
(22) Date of filing: 22.10.1993
(51) Int. Cl.: G08B 5/22, G06K 11/08

(54) **Radio paging receiver**
Personenfunkrufempfänger
Récepteur d'appel de personnes par radio

(30) Priority: 23.10.1992 JP 28564892
(43) Date of publication of application: 27.04.1994
(73) Proprietor: NEC CORPORATION, Tokyo (JP)
(72) Inventor: Fujii, Tomohiro, c/o Nec Corporation, Minato-ku, Tokyo (JP)
(74) Representative: Moir, Michael Christopher

(56) References cited:
- EP-A- 0 146 843
- EP-A- 0 275 165
- EP-A- 0 354 723
- EP-A- 0 382 351
- WO-A-91/16771
- US-A- 3 410 956

## Description

### BACKGROUND OF THE INVENTION

### 1. Field of the Invention

The present invention relates to a radio paging receiver with a display function and simplified control of the positioning of information on the display screen.

### 2. Description of the Related Art

To better understand the present invention, a brief reference will be made to a prior art radio paging receiver having, for example, an LCD display.

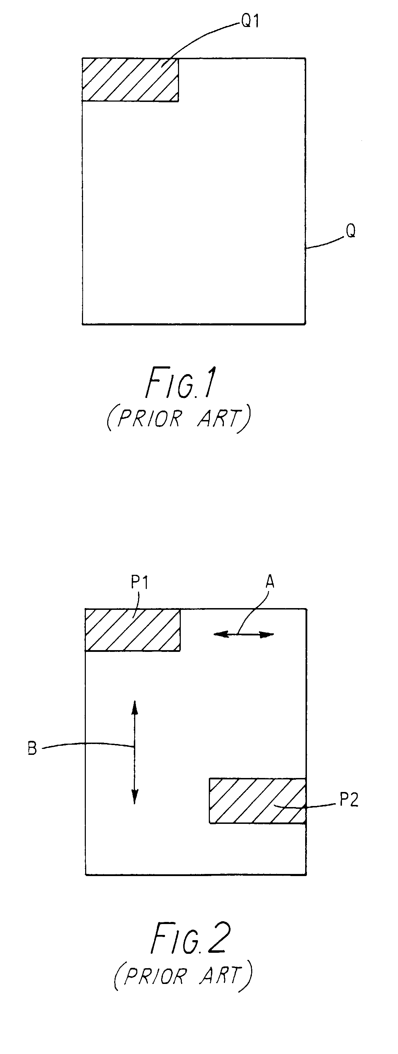

In prior art radio paging receivers with a display function the display size is limited to facilitate transportability. As illustrated in Fig. 1, the quantity Q1 of information that can be displayed at one time on the LCD display of a pager is limited while there has been an increase in the total quantity Q of information received by radio paging receivers and stored therein. For this reason, as shown in Fig. 2, it becomes necessary to perform control so as to shift the information displayed on the LCD and enable all the message information stored in the pager to be displayed. Namely, the read position in the information memory of the pager storing the information to be displayed must be shifted in the horizontal direction A and vertical direction B to move the read position from P1 to the desired storage position P2.

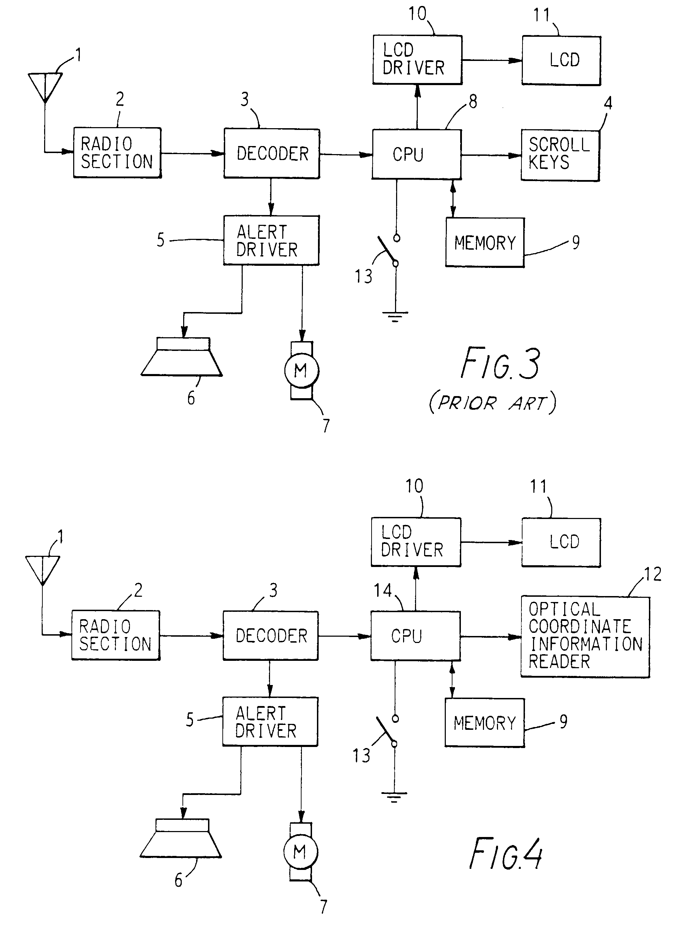

Fig. 3 is a block diagram illustrating the configuration of a prior art radio paging receiver with a display function. In Fig. 3, message signal is received by a radio section 2 via an antenna 1 and sent to a decoder 3. When the decoder 3 detects that an address contained in the received message signal is coincident with an address stored in the decoder 3, the decoder 3 outputs an alert signal to an alert driver 5. The driver 5 drives a speaker 6 or a vibrator 7 to generating an alert according to selection of an user.

Further, by a command of a CPU 8, the received information contained in the received signal is displayed on an LCD 11 through an LCD driver 10. Also, scroll keys 4, a memory 9 and a reset switch 13 are connected to the CPU 8.

According to this prior art, the control to shift the information displayed on the LCD 11 vertically and horizontally with respect to the information stored in the pager memory was achieved by turning ON and OFF the scroll keys 4. When one of the scroll keys 4 is in an ON state, a "01" signal is repeated, the number of that "01" signal (this number corresponds to bit number) is read in by the LCD driver 10 under the control of the CPU 8, and display information is controlled by a command of the CPU 8 in such a way that so much shifting should be accomplished at so many bits.

Therefore, as shown in Fig. 2, shifting in the horizontal direction is controlled with scroll keys for the horizontal direction, and shifting in the vertical direction is controlled with other scroll keys for the vertical direction.

Therefore, in order to find out which part of received information is the most important, the searching had to be accomplished by pressing the scroll keys for the horizontal direction and that for the vertical direction one at a time. This involved much trouble in operation, and posed a major problem to the access to information and the grasp of its total content.

WO91/16771 describes a selective call radio receiver in which a voice message contained in a received signal is stored in a memory for subsequent playback on a display. The receiver includes at least one movement tracking device, either in the form of a knob on the side of the receiver or in the form of a ball located on the bottom of the receiver. The display includes a zoom window identifying a portion of the message. Upon activation of a "zoom-in" button, the portion of the message in the zoom window occupies the entire display. Different portions of the message may be shown by movement of the movement tracking device.

US 4 364 035 describes an optical mouse for controlling a cursor on a display. A detector comprises a housing containing a light source and photodetector. The housing is gripped in the hand and pushed in any direction on a surface on which is formed a passive, position-related array of two groups of lines. A counter receives electrical signals from the photodetector, representing reflection from the lines, to count lines during detector motion over the surface to derive a position signal for the cursor.

### SUMMARY OF THE INVENTION

An object of the present invention is to solve the aforementioned problem, and to provide a radio paging receiver with a display function which significantly simplifies the operation to display information and significantly facilitates the access to information and the grasp of its total content.

According to a first aspect the present invention provides a radio paging receiver with a display function for receiving a radio signal including an address number and display information which may exceed the capacity of the display, the receiver comprising a display means, arranged on a first surface of said receiver, for displaying the display information, and characterised by further comprising an optical position sensor means, arranged on a second surface of said receiver opposite to said first surface, adapted to detect a direction in which the receiver is moved to detect which portion of the information is to be displayed on the display means when the display information exceeds the capacity of the display means, the portion of the information to be displayed being determined by the location of the information in a memory of said receiver, the optical position sensor means comprising a light emitting circuit for emitting light of two different wavelengths, a receiver circuit for receiving reflected light corresponding to the emitted light from said light emitting circuit, said reflected light being reflected by an optical reflective surface providing coordinate information, the optical reflective surface being provided on a plate upon which the receiver is placed to present the optical sensor means to the surface, said optical reflective surface comprising a grid pattern of reflective areas and non-reflective areas, said grid pattern comprising a first pattern of reflective areas and non-reflective areas for absorbing light of one wavelength and a second pattern of reflective areas and non-reflective areas for absorbing light of the other wavelength, wherein in said first pattern, the spacing between the non-reflective areas in a first direction is twice that between the reflective areas and in the second pattern, the spacing between the non-reflective areas in a second direction orthogonal to the first direction is twice that between the reflective areas, whereby the optical position sensor means optically reads and inputs coordinate information upon relative scanning movement between the optical position sensor means and the surface in a desired direction, said relative movement being produced by moving the receiver on the surface, and display control means for identifying said location in said memory to cause the information stored in a particular location to be displayed and for shifting the information displayed on the display means according to the input coordinate information corresponding to the relative scanning movement.

A second aspect of the present invention provides a method of controlling a display arranged on a first surface of a radio paging receiver, the method comprising the step of receiving display information which exceeds the capacity of the display, and characterised by further comprising the steps of memorising said display information, providing an optically reflective surface which provides coordinate information in light reflected therefrom, the optical reflective surface being provided on a plate upon which the receiver is placed to present the optical sensor means to the surface, said optical reflective surface comprising a grid pattern of reflective areas and non-reflective areas, said grid pattern comprising a first pattern of reflective areas and non-reflective areas for absorbing light of one wavelength and a second pattern of reflective areas and non-reflective areas for absorbing light of the other wavelength, wherein in said first pattern, the spacing of the non-reflective areas in a first direction is twice that of the reflective areas and in the second pattern, the spacing of the non-reflective areas in a second direction orthogonal to the first direction is twice that of the reflective areas, irradiating the surface with light of two different wavelengths emitted from a second surface of said receiver opposite to said first surface so as to produce said coordinate information, producing relative movement between an optical position sensor means and said surface, said relative movement being produced by moving the receiver on the surface, detecting the direction and magnitude of the relative movement of the receiver and the surface by detecting light reflected by said surface, identifying memory locations in said memory to cause the information stored therein to be displayed, and shifting the information displayed on the display according to the coordinate information corresponding to the direction and magnitude of the relative movement detected in said detecting step.

### BRIEF DESCRIPTION OF THE DRAWINGS

The above object and features of this invention will become more apparent from the following detailed description (which is by way of example only) taken in conjunction with the attached drawings.
Fig. 1 shows the relationship between the quantity of display information and the total received information in the paging receiver with a display function;
Fig. 2 represents the shifting of display information in a prior paging receiver with a display function;
Fig. 3 is a block diagram of a prior art paging receiver;
Fig. 4 is a block diagram of an embodiment of the present invention;
Fig. 5 is a block diagram of the optical coordinate information reader of the optical position sensor of the embodiment;
Fig. 6 is a perspective view of the optical coordinate information reader;
Figs. 7A to 7C are diagrams for describing a pattern of the coordinate information plate;
Figs. 8A and 8B show the concept for detecting the moving direction of the receiver;
Fig. 9 is a flowchart for detecting the horizontal moving of the receiver;
Fig. 10 is a flowchart for detecting the vertical moving of the receiver;
Fig. 11 is a plan view showing an example of the use of the embodiment of Fig. 4; and
Figs. 12A and 12B are flowcharts showing an operation of the embodiment of Fig. 4.
Fig. 13 is a perspective view showing another arrangement of the optical coordinate information reader of the invention;
Figs. 14A to 14C are diagrams for describing another pattern of the coordinate information plate;
Figs. 15A and 15B show the concept for detecting the moving direction of the receiver; and
Fig. 16 is a flowchart for detecting the vertical moving of the receiver;

In the drawings, the same reference numerals denote the same structural elements.

### DESCRIPTION OF THE PREFERRED EMBODIMENT

Next will be described the present invention with reference to drawings.

The embodiment shown in Fig. 4 has a configuration provided with, in addition to an antenna 1, the radio section 2, the decoder 3, the alert driver 5, the loud speaker 6, the vibrator 7, the memory 9, the LCD driver 10, the LCD 11 and the reset switch 13 which are the same as in the configuration of the prior art shown in Fig. 3, a CPU 14 and an optical mouse coordinate information reader 12 which are directly relevant to the present invention.

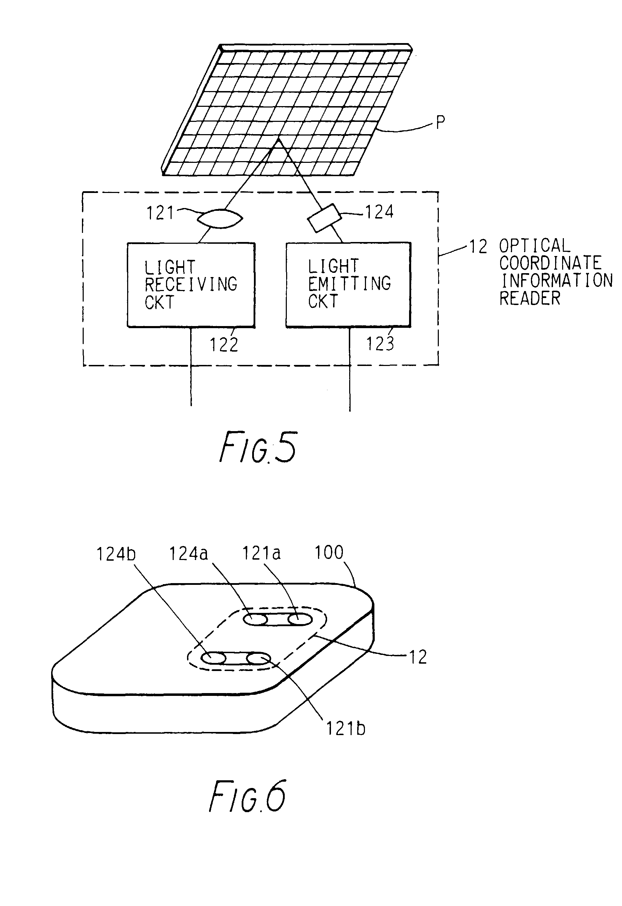

The information reader 12, as illustrated in Fig. 5, is provided with light receiving lens 121, a light receiving circuit 122, a light emitting circuit 123 and a light source 124. The information reader 12 works as an optical mouse for inputting coordinate information.

As light source contained in the light emitting circuit 123, two LED's (Light Emitting Diodes) including an LED for horizontal control and another LED for vertical control are used, and the two LED's are varied in their color of light and wavelengths, serving the purpose of obtaining information on X and Y coordinates, respectively.

In this case, one (wavelength W1) of the outgoing lights of the light emitting circuit 123 serves the purpose of obtaining information expressed by a coordinate information plate P corresponding to the X direction (the horizontal direction) of coordinate information, and the other (wavelength W2), that corresponding to the Y direction (the vertical direction).

A concrete example of the information reader 12 is shown in Fig. 6 which is a perspective view of the bottom surface of the paging receiver 100 of the embodiment.

In the information reader 12, arranged on the bottom surface of the receiver 100, two different light sources 124a and 124b and two different light receiving lenses 121a and 121b are arranged on the same surface. Each of the light sources 124a and 124b includes the above-mentioned two LED's having different wavelengths and are connected to the light emitting circuit 123. Also the lenses 121a and 121b are provided for guiding reflective lights to light receiving elements of the light receiving circuit 122 for receiving the reflected lights issuing from the outgoing lights from these light sources 124a and 124b. Namely, the information reader 12 has two pairs of light source and light receiving lens. Each pair can detect the reflected light of the above-mentioned two different wavelengths.

Photodiodes are used as the receiving elements of the light receiving circuit 122. The outgoing lights coming incident at a right angle on a plate P shown in Fig. 5 from the light sources 124a and 124b of the light emitting circuit 123 are reflected by the plate P and detected by the light receiving elements through the light receiving lenses 121a and 121b. The plate P is formed to have a plurality of small areas in a grid pattern of reflective areas and non-reflective areas. Two different patterns are provided in the same plate P, one is for detecting the horizontal movement of the receiver 100, another is for detecting the vertical movement. Namely, the non-reflective area of the first pattern absorbs the light having the first wavelength, and the non-reflective area of the second pattern absorbs the light having the second wavelength.

Therefore, if the output light of the light emitting circuit 123 irradiates the shaded non-reflective area, there will be no reception of light by the light receiving circuit 122, and no current will flow through the photodiodes, resulting in a "0" signal state.

On the other hand, if the light emitting circuit 123 irradiates the reflective area, reflected light will be detected by the photodiodes of the light receiving circuit 122, and currents will flow, resulting in a "1" signal state. Therefore, the CPU 14 can recognize the moving direction of the receiver 100 on the plate P by detecting the combination of these signals.

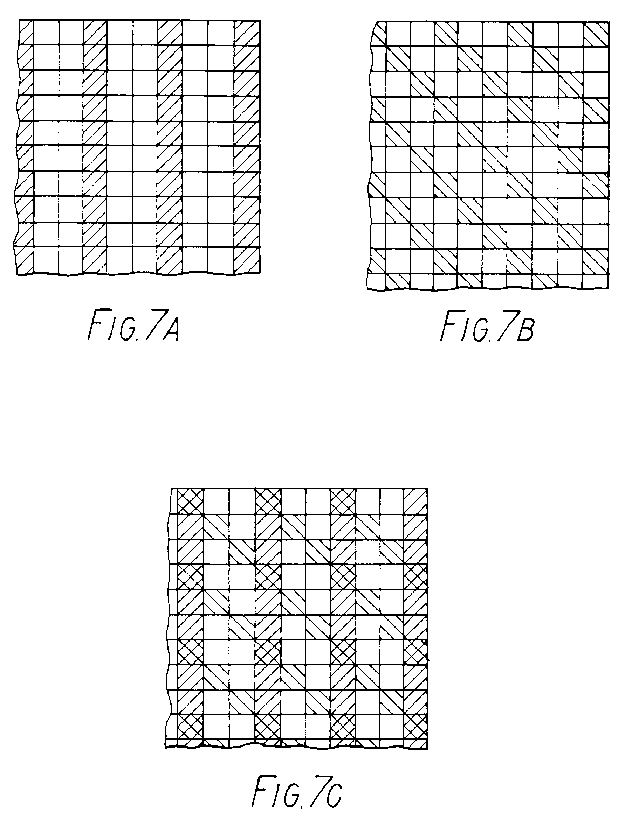

Next, an example of the pattern of the coordinate information plate P will be described referring to Figs. 7A to 7C.

Figs. 7A and 7B respectively show the first pattern for horizontal direction detection and the second pattern for vertical direction detection. The white area is the reflective area, and the shaded area is the non-reflective area. Namely, the non-reflective area of the first pattern shown in Fig. 7A absorbs the light having the wavelength W1. Also, the non-reflective area of the second pattern (Fig. 7B) absorbs the second wavelength W2 light. Therefore, the actual plate P has the combined pattern with the first and second patterns as shown in Fig. 7C.

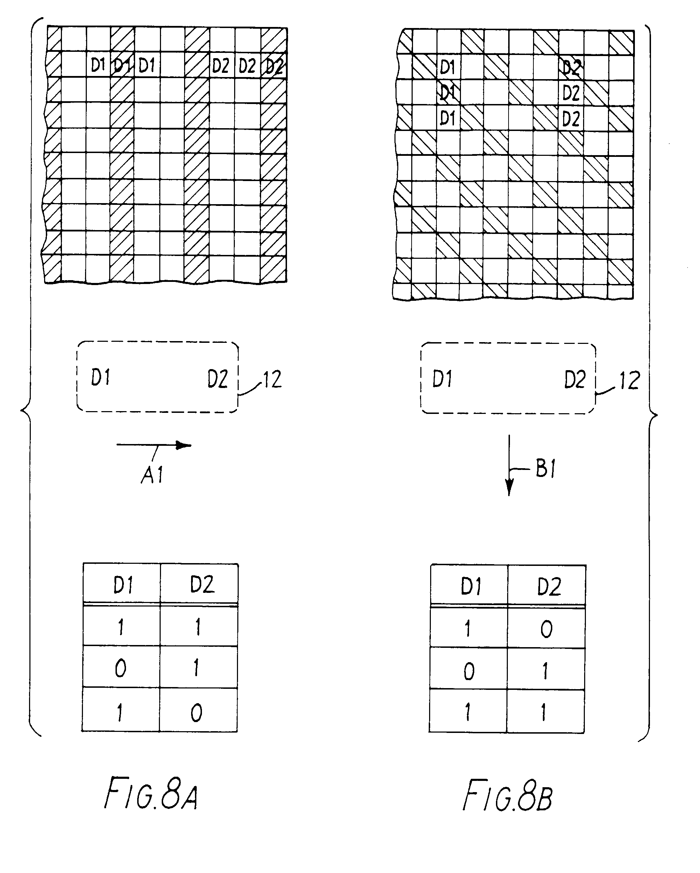

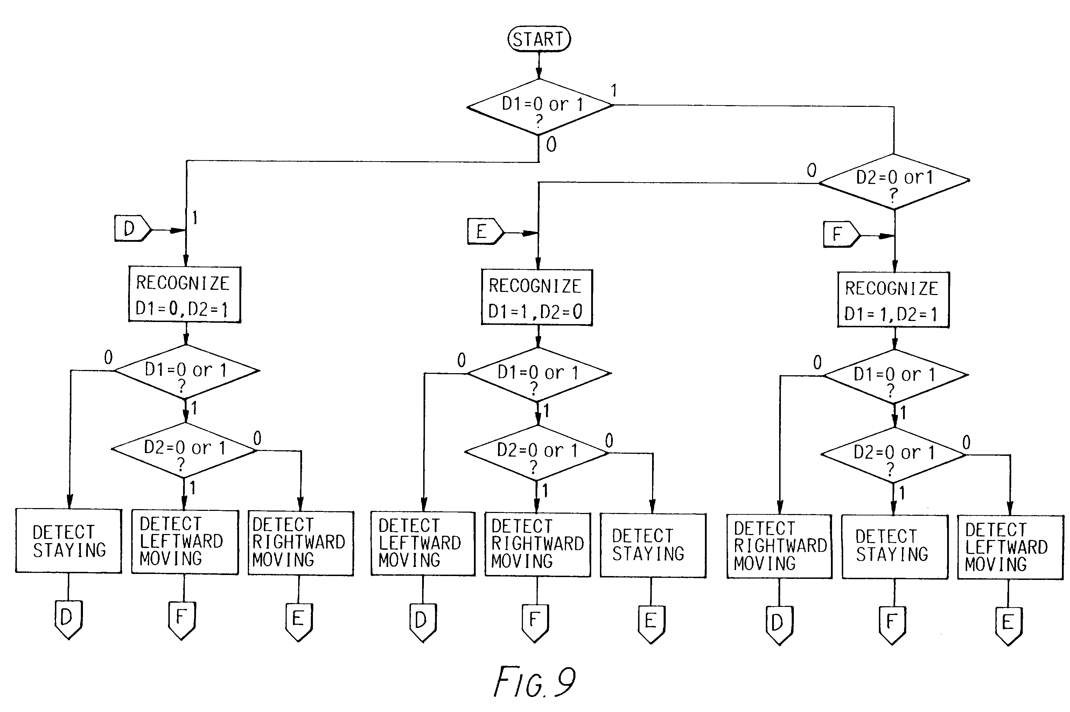

The method for detection will be described referring to Figs. 8A to 10. As shown in Fig. 8A, assume that the information reader 12 shifts rightwardly as shown by arrow A1, the combination of the detected signals of the first wavelength W1 at two detecting points D1 and D2 changes. Three combinations of the detected signals are generated as the pager moves horizontally over the plate P. Therefore, the moving direction of the receiver 100 is detected by a flowchart shown in Fig. 9.

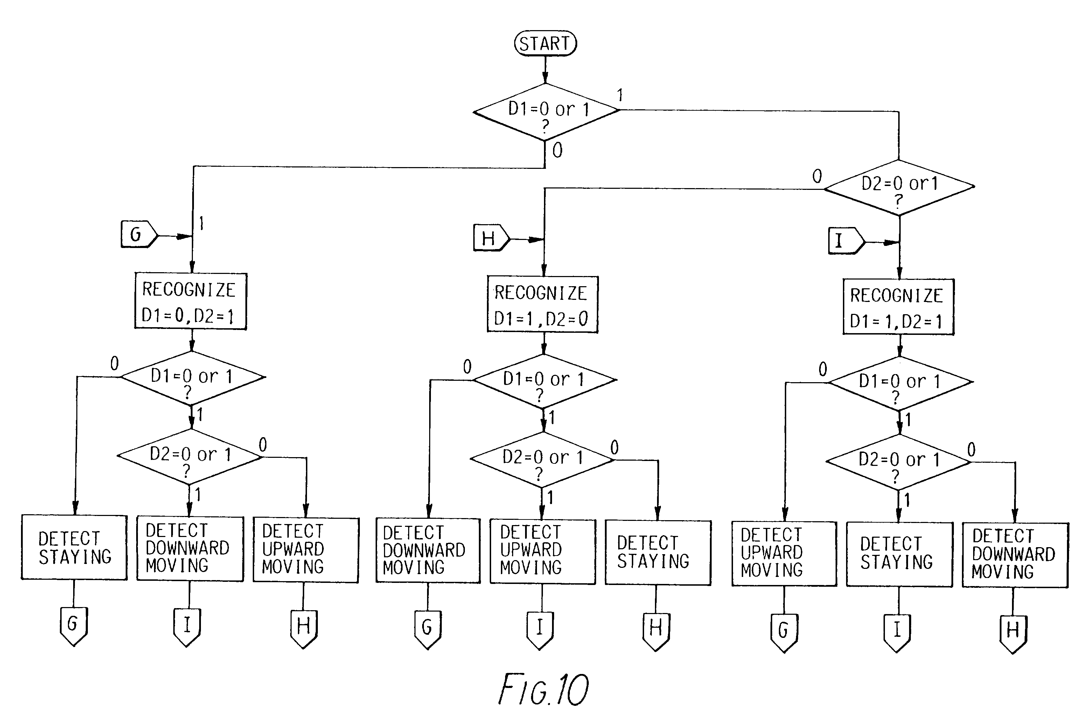

On the other hand, as shown in Fig. 8B, assume that the information reader shifts downwardly as shown by arrow B1, the combination of the detected signals of the second wavelength W2 at two detecting points D1 and D2 changes. Three combinations of the detected signals are also generated as the pager moves vertically over the plate P. Therefore, the moving direction of the receiver 100 is detected by a flowchart shown in Fig. 10. However, in the case of this second pattern shown in Fig. 8B, when the reader 12 shifts horizontally, the same signal combinations are detected. So that after detection of the amount of horizontal moving, the difference between the detected amount of the vertical and the detected amount of the horizontal moving should be made to determine an actual amount of vertical moving.

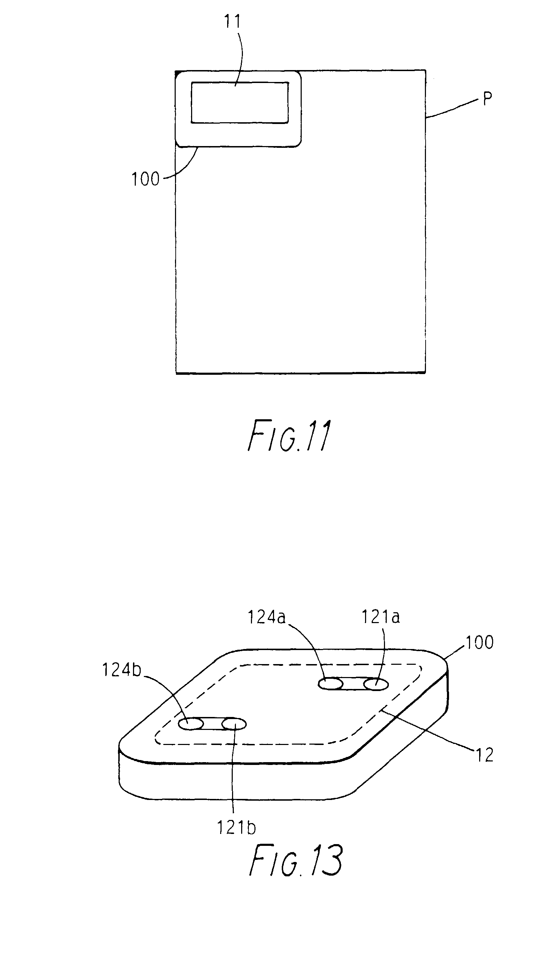

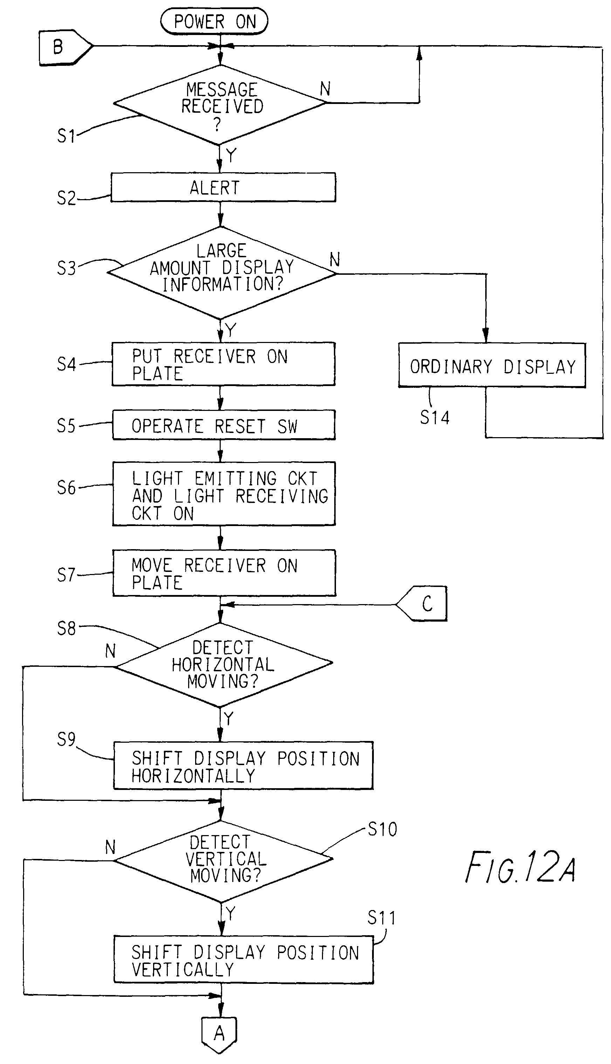

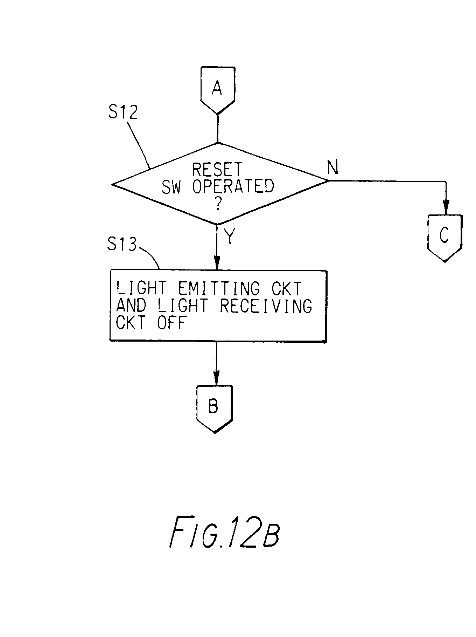

Next, the operation of the embodiment of Fig. 4 will be described referring to Figs. 11, 12A and 12B.

When a user of the paging receiver 100 turns on a power switch (not shown), the receiver 100 enters a message waiting state. When the receiver 100 is paged and receives a display information (step S1), the receiver generates an alert (step S2). If the amount of the received display information is too large to display at one time (step S3), the user puts the receiver 100 on the plate as shown in Fig. 11 (step S4). The receiver 100 is arranged on the plate P with the LCD 11 face up and the optical coordinate information reader 12 face down.

When the user operates the reset switch 13 (step S5), the light emitting circuit 123 and the light receiving circuit 122 are turned on (step S6). Therefore, the light sources output the outgoing lights to the plate P. At the same time, the display position in the initial position is set in the first position P1 of the received display information in the upper left corner as shown in Fig. 2.

Then the user moves the receiver 100 on the plate to shift the displayed information (step S7). On the detection of moving of the receiver 100 in a horizontal direction and a vertical direction by the CPU 14 via optical coordinate information reader 12 (steps S8 and S10), the CPU 14 controls the display on the LCD 11 via the LCD driver 10 to shift the displayed information (steps S9 and S11).

Namely, the change of the above-mentioned signal combination is read by the CPU 14, and the vertical and horizontal shifting quantities of display information are regulated under the control of the CPU 14, thereby enabling the information displayed on the LCD 11 to be shifted according to the position of that information in the pager memory.

Along with rightward shifting on the plate P in the horizontal direction A (Fig. 2), the position of information to be displayed will also move correspondingly rightward, and along with downward shifting in the vertical direction B, the display position of information will be also move downward. Therefore, vertical and horizontal shifting will enable all the information stored in the pager memory to be readily and quickly confirmed.

Then, if the user operates the reset switch 13 again (step S12), the light emitting circuit 123 and the light receiving circuit 122 are turned off (step S13).

In the step S3, if the received display information can be displayed at one time, an ordinary display operation is executed (step S14).

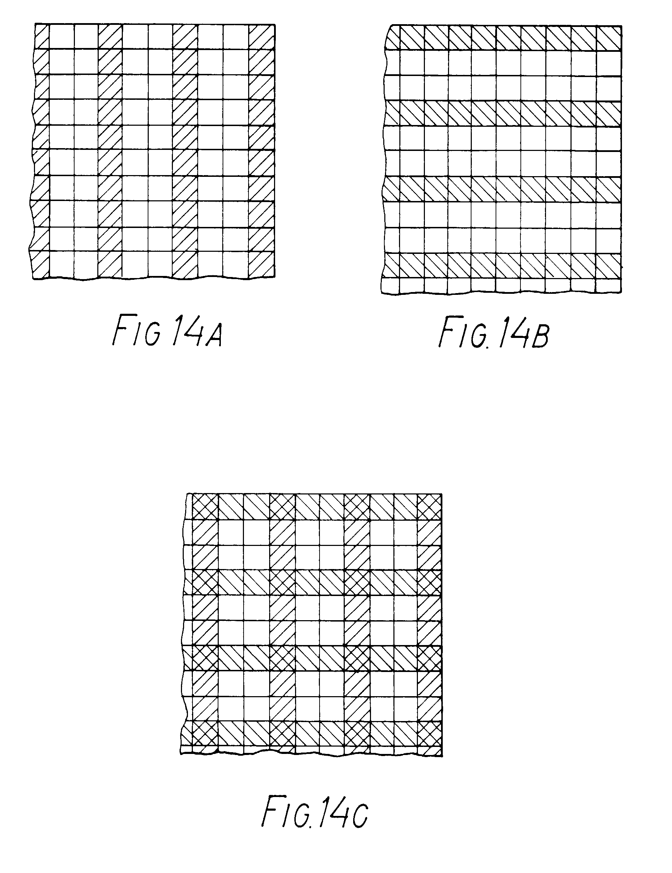

Next, another embodiment of the invention will be described referring to Figs. 13 to 15B.

Another concrete example of the information reader 12 is shown in Fig. 13 which is a perspective view of bottom surface of the paging receiver 100 of the embodiment. In the information reader 12, the two pairs of the light source and the light receiving lens are arranged diagonally.

Figs. 14A and 14B respectively show the first pattern for horizontal direction detection and the second pattern for vertical direction detection for this second embodiment. Therefore, the actual plate P in the second embodiment has the combined pattern with the first and second patterns as shown in Fig. 14C.

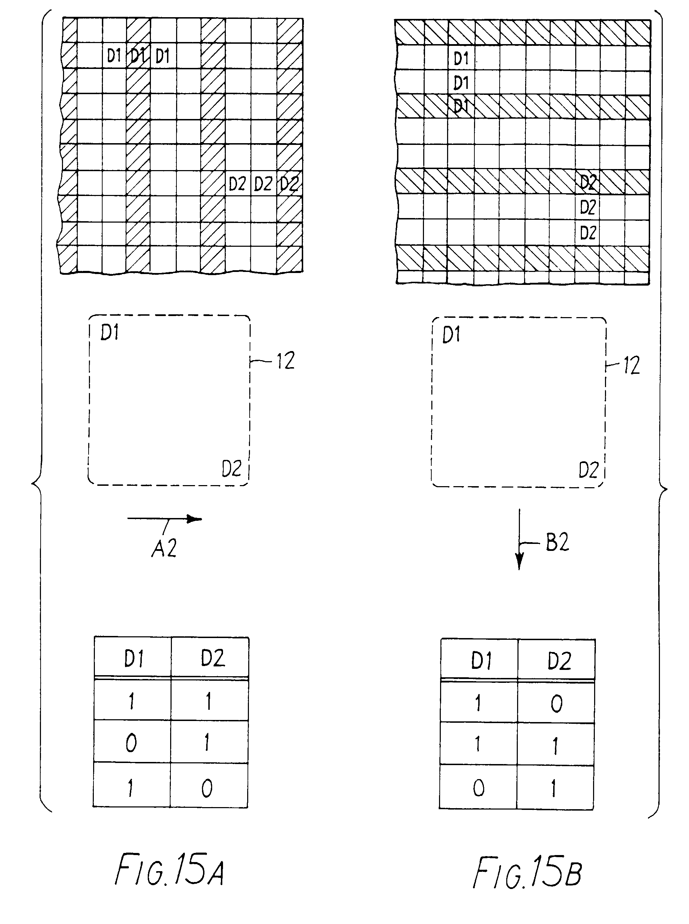

The method for detection will be described referring to Figs. 15A to 15B. As shown in Fig. 15A, assume that the information reader 12 shifts along rightwardly as shown by arrow A2, the combination of the detected signals at the first wavelength W1 at two detecting points D1 and D2 changes. There are three combinations of the detected signals generated by the movement. Therefore, the moving direction of the receiver 100 is detected by the same flowchart shown in Fig. 9 in the first embodiment.

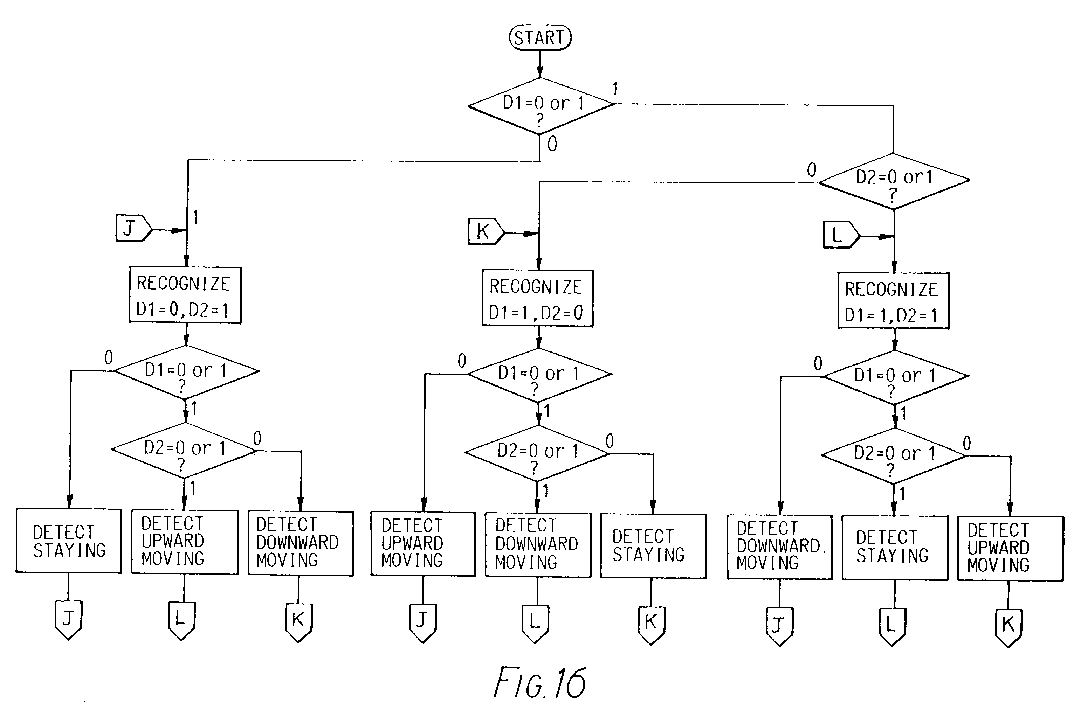

On the other hand, as shown in Fig. 15B, assume that the information reader shifts along downwardly shown by arrow B2, the combination of the detected signals of the second wavelength W2 at two detecting points D1 and D2 changes. There are also three combinations of the detected signals generated by the movement. Therefore, the moving direction of the receiver 100 is detected by a flowchart shown in Fig. 16.

As stated above, the present invention provides the benefit of making it possible to readily and quickly access information and grasp its total content by matching the output of coordinate reading by an optical mouse having a coordination on a display unit, and shifting the displayed position of information on the display unit.

Although the present invention has been fully described by way of a preferred embodiment thereof with reference to the accompanying drawings, various changes and modifications will be apparent to those having skill in this field. Therefore, unless these changes and modifications otherwise depart from the scope of the present invention, they should be construed as included therein.

## Claims

1. A radio paging receiver (100) with a display function for receiving a radio signal including an address number and display information which may exceed the capacity of the display, the receiver comprising:
a display means (11), arranged on a first surface of said receiver (100), for displaying the display information; and characterised by further comprising:
an optical position sensor means (12), arranged on a second surface of said receiver opposite to said first surface, adapted to detect a direction in which the receiver is moved to detect which portion of the information is to be displayed on the display means (11) when the display information exceeds the capacity of the display means (11) the portion of the information to be displayed being determined by the location of the information in a memory (9) of said receiver, the optical position sensor means (12) comprising:
a light emitting circuit (123) for emitting light of two different wavelengths (W1, W2);
a receiver circuit (122) for receiving reflected light corresponding to the emitted light from said light emitting circuit (123), said reflected light being reflected by an optical reflective surface providing coordinate information, the optical reflective surface being provided on a plate (P) upon which the receiver (100) is placed to present the optical sensor means (12) to the surface, said optical reflective surface comprising a grid pattern of reflective areas and non-reflective areas, said grid pattern comprising a first pattern of reflective areas and non-reflective areas for absorbing light of one wavelength and a second pattern of reflective areas and non-reflective areas for absorbing light of the other wavelength, wherein in said first pattern, the spacing between the non-reflective areas in a first direction is twice that between the reflective areas and in the second pattern, the spacing between the non-reflective areas in a second direction orthogonal to the first direction is twice that between the reflective areas;
whereby the optical position sensor means (12) optically reads and inputs coordinate information upon relative scanning movement between the optical position sensor means (12) and the surface in a desired direction, said relative movement being produced by moving the receiver on the surface; and
display control means (14) for identifying said location in said memory (9) to cause the information stored in a particular location to be displayed and for shifting the information displayed on the display means (11) according to the input coordinate information corresponding to the relative scanning movement.

2. A radio paging receiver as claimed in Claim 1, wherein said receiver circuit (122) separately receives said reflected light of two different wavelengths to detect the direction of the relative movement.

3. A radio paging receiver as claimed in Claim 2, wherein said optical position sensor means (12) has at least two pairs of a light emitting source (124) and a receiver lens (121).

4. A radio paging receiver as claimed in Claim 3, wherein said pairs are arranged diagonally of rectangular coordinate axes to detect separately relative movement of said sensor means (12) and surface parallel to each of said axes and to provide coordinate information relative thereto.

5. A radio paging receiver as claimed in Claim 4, wherein the optical reflective surface provides rectangular coordinate information.

6. A radio paging receiver as claimed in Claim 5, wherein said optical reflective face is divided into a plurality of small areas in said grid pattern, some of said small areas being reflective of light of one said wavelength and non-reflective of light of the other said wavelength, other of said small areas being non-reflective of light of the one wavelength and reflective of light of the other wavelength.

7. A radio paging receiver according to any preceding claim, wherein said non-reflective areas for absorbing light having the other wavelength extend diagonally with respect to the non-reflective areas for absorbing light having said one wavelength.

8. A method of controlling a display arranged on a first surface of a radio paging receiver (100), the method comprising the step of:
receiving display information which exceeds the capacity of the display; and characterised by further comprising the steps of:
memorising said display information;
providing an optically reflective surface which provides coordinate information in light reflected therefrom, the optical reflective surface being provided on a plate (P) upon which the receiver (100) is placed to present the optical sensor means (12) to the surface, said optical reflective surface comprising a grid pattern of reflective areas and non-reflective areas, said grid pattern comprising a first pattern of reflective areas and non-reflective areas for absorbing light of one wavelength and a second pattern of reflective areas and non-reflective areas for absorbing light of another wavelength, wherein in said first pattern, the spacing between the non-reflective areas in a first direction is twice that between the reflective areas and in the second pattern, the spacing between the non-reflective areas in a second direction orthogonal to the first direction is twice that between the reflective areas;
irradiating the surface with light of two different wavelengths (W1, W2); emitted from a second surface of said receiver opposite to said first surface so as to produce said coordinate information;
producing relative movement between an optical position sensor means and said surface, said relative movement being produced by moving the receiver on the surface;
detecting the direction and magnitude of the relative movement of the receiver and the surface by detecting light reflected by said surface;
identifying memory locations in said memory to cause the information stored therein to be displayed; and
shifting the information displayed on the display according to the coordinate information corresponding to the direction and magnitude of the relative movement detected in said detecting step.

## Patentansprüche

1. Personenfunkrufempfänger (100) mit einer Anzeigefunktion zum Empfangen eines Funksignals, das eine Adressennummer und Anzeigeinformation einschließt, die die Kapazität der Anzeige überschreiten kann, welcher Empfänger aufweist:
ein Anzeigemittel (11), das auf einer ersten Oberfläche des Empfängers (100) zum Anzeigen der Anzeigeinformation angeordnet ist, und der dadurch gekennzeichnet ist, daß er weiter aufweist:
ein optisches Positionsdetektionsmittel (12), das auf einer zweiten Oberfläche des Empfängers gegenüber der ersten Oberfläche angeordnet ist und dazu ausgebildet ist, eine Richtung zu detektieren, in der der Empfänger beweg wird, um zu detektieren, welcher Teil der Information auf dem Anzeigemittel (11) angezeigt werden soll, wenn die Anzeigeinformation die Kapazität des Anzeigemittels (11) überschreitet, wobei der Teil der Information, der gezeigt werden soll, durch den Ort der Information in einem Speicher (9) des Empfängers bestimmt ist, wobei das optische Positionsdetektionsmittel (12) aufweist:
eine lichtemittierende Schaltung (123) zum Emittieren von Licht von zwei unterschiedlichen Wellenlängen (W1, W2);
eine Empfängerschaltung (122) zum Empfangen von reflektiertem Licht, das dem emittierten Licht von der lichtemittierenden Schaltung (123) entspricht, wobei das reflektierte Licht durch eine optisch reflektierende Oberfläche reflektiert wird, die Koordinateninformation liefert, wobei die optisch reflektierenden Oberfläche auf einer Platte (P) vorgesehen ist, auf der der Empfänger (100) angeordnet wird, um das optische Detektionsmittel (12) der Oberfläche zu präsentieren, wobei die optische reflektierende Oberfläche ein Gittermuster von reflektierenden Gebieten und nicht-reflektierenden Gebieten aufweist, welches Gittermuster ein erstes Muster von reflektierenden Gebieten und nicht-reflektierenden Gebieten zum Absorbieren von Licht einer Wellenlänge und ein zweites Muster von reflektierenden Gebieten und nicht-reflektierenden Gebieten zum Absorbieren von Licht der anderen Wellenlänge aufweist, wobei in dem ersten Muster der Abstand zwischen nicht-reflektierenden Gebieten in einer ersten Richtung gleich zweimal demjenigen zwischen reflektierenden Gebieten und in dem zweiten Muster der Abstand zwischen den nicht-reflektierenden Gebieten in einer zweiten Richtung senkrecht zur ersten Richtung zweimal desjenigen zwischen reflektierenden Gebieten ist;
wobei das optische Positionsdetektormittel (12) optisch Koordinateninformation liest und eingibt bei einer relativen Abtastbewegung zwischen dem optischen Positionsdetektionsmittel (12) und der Oberfläche in einer gewünschten Richtung, wobei die Relativbewegung durch Bewegen des Empfängers auf der Oberfläche erzeugt wird; und
Anzeigesteuermittel (14) zum Identifizieren des Ortes in dem Speicher (9), um zu bewirken, daß die an einem speziellen Ort gespeicherte Information angezeigt wird und um die Information, die auf dem Anzeigemittel (11) gezeigt wird, gemäß der eingegebenen Koordinateninformation zu verschieben, die der relativen Abtastbewegung entspricht.

2. Personenfunkrufempfänger nach Anspruch 1, bei dem die Empfängerschaltung (122) getrennt das reflektierte Licht von zwei unterschiedlichen Wellenlängen empfängt, um die Richtung der relativen Bewegung zu detektieren.

3. Personenfunkrufempfänger nach Anspruch 2, bei dem das optische Positionsdetektormittel (12) wenigstens zwei Paare von einer lichtemittierenden Quelle (124) und einer Empfängerlinse (121) aufweist.

4. Personenfunkrufempfänger nach Anspruch 3, in dem die Teile diagonal auf rechteckigen Koordinatenachsen angeordnet sind, um getrennt relative Bewegung des Detektormittels (12) und der Oberfläche parallel zu jeder der Achsen zu detektieren und um Koordinateninformation relativ dazu zu liefern.

5. Personenfunkrufempfänger nach Anspruch 4, in dem die optisch reflektierende Oberfläche Rechteckkoordinateninformation liefert.

6. Personenfunkrufempfänger nach Anspruch 5, in dem die optisch reflektierende Oberfläche in eine Vielzahl von kleinen Gebieten in dem Gittermuster aufgeteilt ist, wobei einige der kleinen Gebiete für Licht einer der Wellenlängen reflektierend und für Licht der anderen der Wellenlängen nicht-reflektierend sind, wobei andere der kleinen Gebiete nicht-reflektierend für Licht der einen Wellenlänge und reflektierend für Licht der anderen Wellenlänge sind.

7. Personenfunkrufempfänger nach einem vorangehenden Anspruch, bei dem die nicht-reflektierenden Gebiete zum Absorbieren von Licht, das die andere Wellenlänge hat, sich diagonal in Bezug auf die nicht-reflektierenden Gebiete zum Absorbieren von Licht erstrecken, das die eine Wellenlänge hat.

8. Verfahren zum Steuern einer Anzeige, die auf einer ersten Oberfläche eines Personenfunkrufempfängers (100) angeordnet ist, welches Verfahren die Schritte aufweist:
Anzeigeinformation zu empfangen, die die Kapazität der Anzeige überschreitet; und das dadurch gekennzeichnet ist, daß es weiter die Schritte aufweist:
die Anzeigeinformation zu speichern;
eine optisch reflektierende Oberfläche zur Verfügung stellen, die Koordinateninformation in von derselben reflektiertem Licht liefert, wobei die optisch reflektierende Oberfläche auf einer Platte (P) vorgesehen ist, auf der der Empfänger (100) aufgesetzt wird, um ein optisches Detektionsmittel (12) der Oberfläche zu präsentieren, wobei die reflektierende Oberfläche ein Gittermuster von reflektierenden Gebieten und nicht-reflektierenden Gebieten aufweist, welches Gittermuster ein erstes Muster von reflektierenden Gebieten und nicht-reflektierenden Gebieten zum Absorbieren von Licht einer Wellenlänge und ein zweites Muster von reflektierenden Gebieten und nicht-reflektierenden Gebieten zum Absorbieren von Licht einer anderen Wellenlänge aufweist, wobei in dem ersten Muster der Abstand zwischen den nicht-reflektierenden Gebieten in einer ersten Richtung gleich zweimal demjenigen zwischen den reflektierenden Gebieten und im zweiten Muster der Abstand zwischen den nicht-reflektierenden Gebieten in einer zweiten Richtung senkrecht zur ersten Richtung zweimal demjenigen zwischen den reflektierenden Gebieten ist;
die Oberfläche mit Licht von zwei unterschiedlichen Wellenlängen (W1,W2) zu bestrahlen, das von einer zweiten Oberfläche des Empfängers gegenüber der ersten Oberfläche emittiert wird, um so die Koordinateninformation zu erzeugen;
Relativbewegung zwischen einem optischen Positionsdetektormittel und der Oberfläche zu schaffen, wobei die Relativbewegung durch Bewegen des Empfängers auf der Oberfläche erzeugt wird;
die Richtung und Größe der Relativbewegung des Empfängers und der Oberfläche zu detektieren, indem von der Oberfläche reflektiertes Licht detektiert wird;
Speicherorte in dem Speicher zu identifizieren, um zu bewirken, daß die darin gespeicherte Information angezeigt wird; und
die auf der Anzeige angezeigte Information entsprechend der Koordinateninformation zu verschieben, die Richtung und Größe der Relativbewegung entspricht, die in dem Detektionsschritt detektiert wurden.

## Revendications

1. Récepteur d'appel radio (100) ayant une fonction d'affichage pour recevoir un signal radio incluant un numéro d'adresse et des informations à afficher pouvant dépasser la capacité d'affichage, le récepteur comprenant :
un moyen d'affichage (11), disposé sur une première surface dudit récepteur (100), pour afficher les informations à afficher ; et caractérisé en ce qu'il comprend, en outre :
un moyen à capteur de position optique (12), disposé sur une seconde surface dudit récepteur opposée à ladite première surface, conçu pour détecter une direction selon laquelle le récepteur est déplacé pour détecter la partie des informations qui doivent être affichées sur le moyen d'affichage (11) lorsque les informations à afficher dépassent la capacité du moyen d'affichage (12), la partie des informations devant être affichées étant déterminée par l'emplacement des informations dans une mémoire (9) dudit récepteur, le moyen à capteur de position optique (12) comprenant :
un circuit émetteur de lumière (123) pour émettre une lumière ayant deux longueurs d'onde différentes (W1, W2) ;
un circuit récepteur (122) pour recevoir la lumière réfléchie correspondant à la lumière émise à partir dudit circuit émetteur de lumière (123), ladite lumière réfléchie étant réfléchie par une surface optique réfléchissante fournissant des informations de coordonnées, la surface optique réfléchissante étant placée sur une plaque (P) sur laquelle est placé le récepteur (100) afin de présenter le moyen à capteur optique (12) à la surface, ladite surface optique réfléchissante comprenant une configuration de grille composée d'aires réfléchissantes et d'aires non réfléchissantes, ladite configuration de grille comprenant une première configuration d'aires réfléchissantes et d'aires non réfléchissantes pour absorber la lumière ayant une première longueur d'onde, et une seconde configuration d'aires réfléchissantes et d'aires non réfléchissantes pour absorber la lumière ayant l'autre longueur d'onde, dans lequel, dans ladite première configuration, l'espacement entre les aires non réfléchissantes selon une première direction est double de l'espacement entre les aires réfléchissantes, et, dans la seconde configuration, l'espacement entre les aires non réfléchissantes selon une seconde direction orthogonale à la première direction est double de l'espacement entre les aires réfléchissantes ;
de sorte que le moyen à capteur de position optique (12) lit et reçoit par voie optique les informations de coordonnées lors du mouvement de balayage relatif entre le moyen à capteur de position optique (12) et la surface selon une direction souhaitée, ledit mouvement relatif étant produit en déplaçant le récepteur sur la surface ; et
un moyen de commande d'affichage (14) pour identifier ledit emplacement dans ladite mémoire (9) afin que les informations mémorisées dans un emplacement particulier soient affichées et pour déplacer les informations affichées sur le moyen d'affichage (11) en fonction des informations de coordonnées entrées qui correspondent au mouvement de balayage relatif.

2. Récepteur d'appel radio selon la revendication 1, dans lequel ledit circuit récepteur (122) reçoit séparément ladite lumière réfléchie ayant deux longueurs d'onde différentes afin de détecter la direction du mouvement relatif.

3. Récepteur d'appel radio selon la revendication 2, dans lequel ledit moyen à capteur de position optique (12) comporte au moins deux paires d'une source émettrice de lumière (124) et une lentille de récepteur (121).

4. Récepteur d'appel radio selon la revendication 3, dans lequel lesdites paires sont disposées diagonalement par rapport à des axes de coordonnées orthogonaux afin de détecter séparément le mouvement relatif dudit moyen à capteur (12) et de la surface parallèle par rapport à chacun desdits axes et de fournir les informations de coordonnées qui lui sont relatives.

5. Récepteur d'appel radio selon la revendication 4, dans lequel la surface optique réfléchissante fournit des informations de coordonnées rectangulaires.

6. Récepteur d'appel radio selon la revendication 5, dans lequel ladite face réfléchissante optique est divisée en une pluralité de petites aires au sein de ladite configuration de grille, certaines desdites petites aires réfléchissant la lumière ayant la première dite longueur d'onde et ne réfléchissant pas la lumière ayant l'autre dite longueur d'onde, les autres dites petites aires ne réfléchissant pas la lumière ayant la première longueur d'onde et réfléchissant la lumière ayant l'autre longueur d'onde.

7. Récepteur d'appel radio selon l'une quelconque des revendications précédentes, dans lequel lesdites aires non réfléchissantes pour absorber la lumière ayant l'autre longueur d'onde s'étendent diagonalement par rapport aux aires non réfléchissantes pour absorber la lumière ayant ladite première longueur d'onde.

8. Procédé de commande d'un afficheur disposé sur une première surface d'un récepteur d'appel radio (100), le procédé comprenant l'étape consistant :
à recevoir les informations à afficher qui dépassent la capacité de l'afficheur ; et caractérisé en ce qu'il comprend, en outre, les étapes consistant :
à mémoriser lesdites informations à afficher ;
à prévoir une surface optiquement réfléchissante qui transmet des informations de coordonnées sous forme de lumière réfléchie sur celle-ci, la surface optique réfléchissante étant placée sur une plaque (P) sur laquelle est placé le récepteur (100) pour présenter le moyen à capteur optique (12) à la surface, ladite surface optique réfléchissante comprenant une configuration de grille d'aires réfléchissantes et d'aires non réfléchissantes, ladite configuration de grille comprenant une première configuration d'aires réfléchissantes et d'aires non réfléchissantes pour absorber une lumière ayant une première longueur d'onde, et une seconde grille d'aires réfléchissantes et d'aires non réfléchissantes pour absorber une lumière d'une autre longueur d'onde, dans lequel, dans ladite première configuration, l'espacement entre les aires non réfléchissantes selon une première direction est double de l'espacement entre les aires réfléchissantes et, dans la seconde configuration, l'espacement entre les aires non réfléchissantes selon une seconde direction orthogonale à la première direction est double de l'espacement entre les aires réfléchissantes ;
à irradier la surface de lumière ayant deux longueurs d'onde différentes (W1, W2) émise par une seconde surface dudit récepteur opposée à ladite première surface de manière à produire lesdites informations de coordonnées ;
à produire un mouvement relatif entre un moyen à capteur de position optique et ladite surface, ledit mouvement relatif étant produit en déplaçant le récepteur sur la surface ;
à détecter la direction et l'amplitude du mouvement relatif du récepteur et de la surface en détectant la lumière réfléchie par ladite surface ;
à identifier les emplacements de mémoire dans ladite mémoire afin d'amener les informations qui y sont mémorisées à être affichées ; et
à décaler les informations affichées sur l'afficheur en fonction des informations de coordonnées correspondant à la direction et à l'amplitude du mouvement relatif détecté lors de ladite étape de détection.
